# EUROPEAN PATENT APPLICATION

(11) **EP 1 470 928 A1**
(43) Date of publication of application: **27.10.2004**
(21) Application number: 02792064.4
(22) Date of filing: 27.12.2002
(51) Int. Cl.: B41M 5/00, B41J 2/01, C08F 2/22, C09D 157/06, C09D 143/04

(54) **COATING COMPOSITION FOR INK-JET RECORDING MEDIUM AND INK-JET RECORDING MEDIUM**

(30) Priority: 28.12.2001 JP 2001401067
(71) Applicant: Clariant International Ltd., 4132 Muttenz (CH)
(72) Inventor: MURASE, Naokazu, c/o CLARIANT POLYMERS K.K., Ogasa-gun, Shizuoka 437-1412 (JP); YOSHIMURA, Nobuyoshi, c/o CLARIANT POLYMERS K.K., Ogassa-gun, Shizuoka 437-1412 (JP); NISHIHASHI, Yoichiro, c/o CLARIANT POLYMERS K.K., Ogasa-gun, Shizuoka 437-1412 (JP)
(74) Representative: Paczkowski, Marcus, Dr.
(86) International application number: PCT/JP2002/013848
(87) International publication number: WO 2003/057495

(57) **Abstract**

The present invention relates to a coating composition for an ink jet recording medium comprising a synthetic resin emulsion having a particle diameter of 100 nm or less and colloidal silica, said synthetic resin emulsion being obtained by, in the presence of (A) an emulsifier containing a radical-polymerizable emulsifier having a sulfonic acid group, emulsion-polymerizing (B) an unsaturated monomer having a silyl group and (C) an unsaturated monomer having a six-membered ring as a side chain and, optionally, (D) another radical-polymerizable unsaturated monomer which is copolymerizable with (B) and (C).

## Description

### Technical Field of the Invention

The present invention relates to a coating composition for a recording medium which is used in ink jet printing, adopted for photo-quality images and has a high gloss and, in particular, to a coating composition used for providing a cast layer on the ink fixation layer to render a gloss. Furthermore, the present invention relates to an ink jet recording medium coated with such a coating composition. The ink jet recording medium coated with the composition according to the present invention has a high gloss, is excellent in ink permeability and, thus, produces no blurs of inks and provides excellent color development and, further, is also excellent in the transparency of the coating layer and therefore gives clear images without any cloud.

### Prior Art

It is known to use a coating composition, comprising a composite of a synthetic resin emulsion and colloidal silica, as the top coat on an ink jet printing medium such as paper, thereby giving glossy paper sheets for photo-quality image reproduction.

JP Hei 07-149038 A discloses a high-glossy recording medium for ink jet printing, obtained by applying a coating composition, comprising a composite of a synthetic resin emulsion and colloidal silica, onto a substrate having an ink fixation layer, and then subjecting the substrate to a casting processing. The coating layer thus obtained is said to have a good ink permeability due to the porosity of the film and to produce less blurs of inks.

Recent years find greatly improved printing accuracy of ink jet printers and, in order to keep up with such improvements, recording media for ink jet printing are required to have physical properties, such as an even improved gloss, an improved ink permeability to obtain images without ink-blurring, a color-developablility without any cloud, and others.

For such physical properties required, various attempts have been made. As one of such attempts, it is known that reduction in the particle diameter of synthetic resin emulsions is useful for improving the color-development. Further, JP2000-238419 A discloses a recording medium for a high-quality image, obtained by providing two coating layers and incorporating a synthetic resin emulsion having a mean particle diameter of 0.02 to 0.15 pm and also colloidal silica having a mean particle diameter of 0.01 to 5pm into, at least, the surface layer.

In general, reduction in the particle diameter by using a larger amount of an emulsifier causes the emulsifier to bleed out on the surface of the coating layer, thereby preventing the permeation of the aqueous ink and causing blurring of the ink on the surface and, consequently, reducing the ink permeability. On the other hand, so called "hydrosol"-type emulsions with a smaller particle diameter obtained through neutralization by containing a large amount of carboxyl groups tend to, due to the high content of hydrophilic monomers, cause swelling by aqueous inks and thus lead image-blurring. In addition, said "hydrosol"-type emulsions also have a problem that desired water-resistance can be obtained only with difficulties. Furthermore, in the case of "microgel" types with a smaller particle diameter obtained through microsuspension polymerization, there is a problem that the emulsion particles do not readily undergo fusion with each other and thus are not good in the film-forming property. So, consequently, no sufficient gloss can be achieved. Moreover, high-speed printing required these days find a problem that an excessive content of silica reduces the fixing power of pigments and tends to cause falling of silica, which then spoils the paper-feeding rolls of printers and reducing the paper-feeding efficiency.

### Problems to be Solved by this invention

Therefore, there is a need for a coating composition which, while keeping the smooth ink permeation into the ink-receiving layer as possessed by prior art coating compositions for cast layers, can further improve the gloss which was conventionally insufficient and, in particular, form stable coating films which provide an excellent color-development and no cohesion of coating liquids, and also has a less tendency to cause falling of silica from the coating layer.

### Means to Solve the Problems

It has been found that said problems can be achieved according to the present invention by using a composition for the gloss layer coating of ink jet recording media, said composition comprising a synthetic resin emulsion having a particle diameter of 100 nm or less and colloidal silica, and being obtainable by emulsion-polymerizing, in the presence of (A) an emulsifier which contains a radically polymerizable emulsifier having an sulfonic acid group, (B) an unsaturated monomer having a silyl group and (C) an unsaturated monomer having a six-membered ring as a side chain and, optionally, another radically polymerizable monomer which is copolymerizable with (B) and (C).

Namely, it has been found that, according to the present invention, by conducting emulsion polymerization in the presence of said emulsifier (A) which contains a radically polymerizable emulsifier having sulfonic acid groups, the emulsifier is not bled out on the surface of film, the ink permeability is not adversely affected, the anti-scratching property of the surface of film is improved owing to the copolymerizability of the unsaturated monomer (B) having silyl groups and, further, falling of silica from the coating layer can also be improved. In addition, by copolymerization using, as the main monomer, said unsaturated monomer (C) having six-membered rings as side chains, emulsion particles having very small particle diameters can be obtained even with a relatively small amount of the emulsifier, thereby giving a dense film of high transparency. Further yet, owing to the coexistence of colloidal silica with such copolymers, the ink-receiving capacity can be improved while keeping the transparency of the gloss layer.

### Modes to practice the Invention

The present invention relates to a coating composition for ink jet recording media comprising a synthetic resin emulsion having a particle diameter of 100 nm or less and colloidal silica, said synthetic resin emulsion being obtainable by, in the presence of (A) an emulsifier which contains a radically polymerizable emulsifier having sulfonic acid groups, emulsion-polymerizing (B) an unsaturated monomer having silyl groups and (C) an unsaturated monomer having six-membered rings as side chains and, optionally, (D) another radically polymerizable unsaturated monomer which is copolymerizable with (C) and (D), and also a ink jet recording medium with such a coating composition applied thereon.

The synthetic resin emulsion, which is a constituent of the coating composition according to the present invention, can be obtained by, in the presence of (A) an emulsifier which contains a radically polymerizable emulsifier having a sulfonic acid group, emulsion-polymerizing (B) an unsaturated monomer having a silyl group and (C) an unsaturated monomer having a six-membered ring as a side chain and, optionally, (D) another radically polymerizable unsaturated monomer which is copolymerizable with (B) and (C). According to the present invention, in particular, through copolymerizing, as the main monomer component, said unsaturated monomer (C) having a six-membered ring as a side chain, synthetic resin emulsions having desired physical properties can be obtained.

Components, from which the composition according to the present invention is composed, will be then described.

### <Emulsifier>

As emulsifiers used according to the present invention, mention can be specifically made of conventional anionic, cationic or nonionic emulsifiers, but, in particular, of emulsifiers which contain a radically polymerizable emulsifier having one or more radically polymerizable unsaturated groups and having sulfonic groups in their molecules.

Such a radically polymerizable emulsifier, owing to the existence of its polymerizable unsaturated bonds, chemically binds with polymer components and, thus, does not bleed out over the surface of film in the form of a liberated emulsifier when forming a film. Therefore, ink blurs do not occur during ink jet printing and the ink smoothly permeates into the fixation layer. Without said radically polymerizable emulsifier having sulfonic groups, a liberated emulsifier bleeds out and exists over the surface of film, causing ink blurring during printing.

Said radically polymerizable emulsifier can be suitably selected from the known class of substances and, specifically, may be a styrene sulfonate, a vinyl sulfonate, a methacryl sulfonate, a sulfoethyl methacrylate, a 2-acrylamide-2-methylpropane sulfonate and compounds 1-10 as shown below:

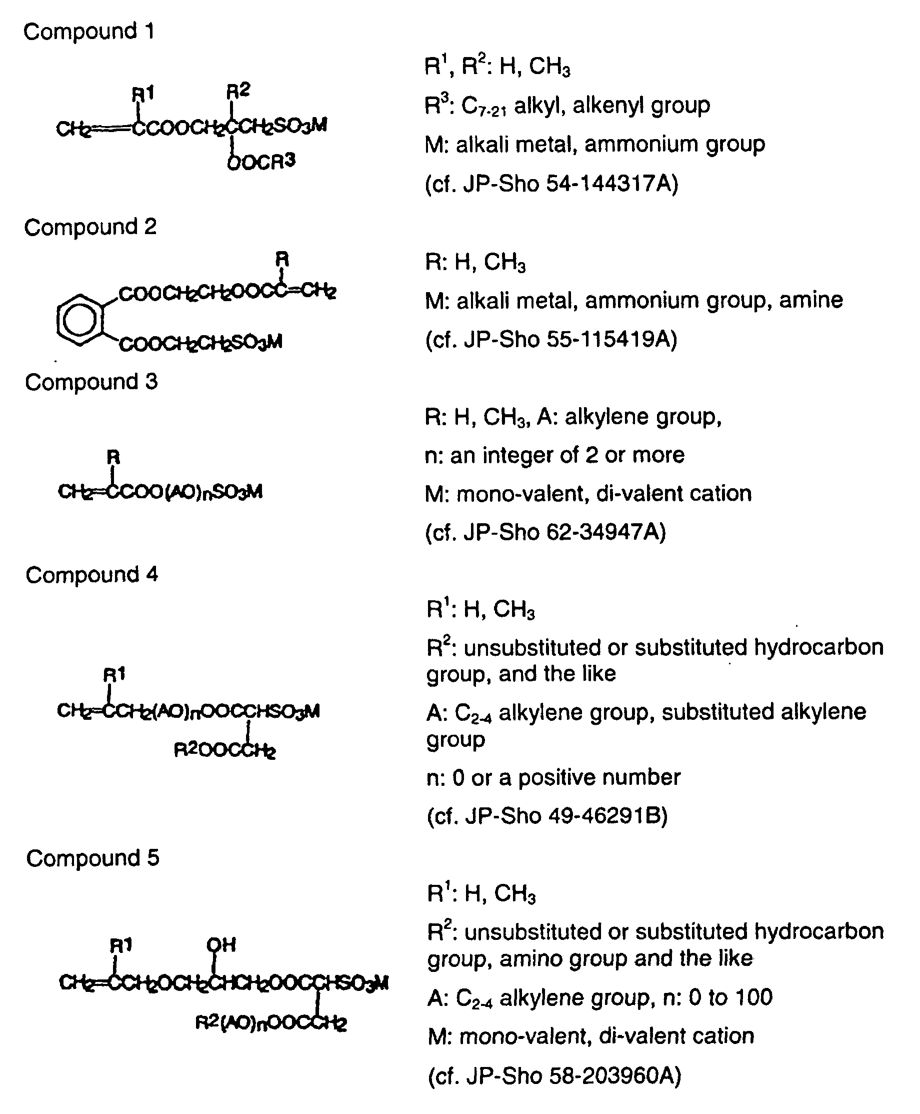

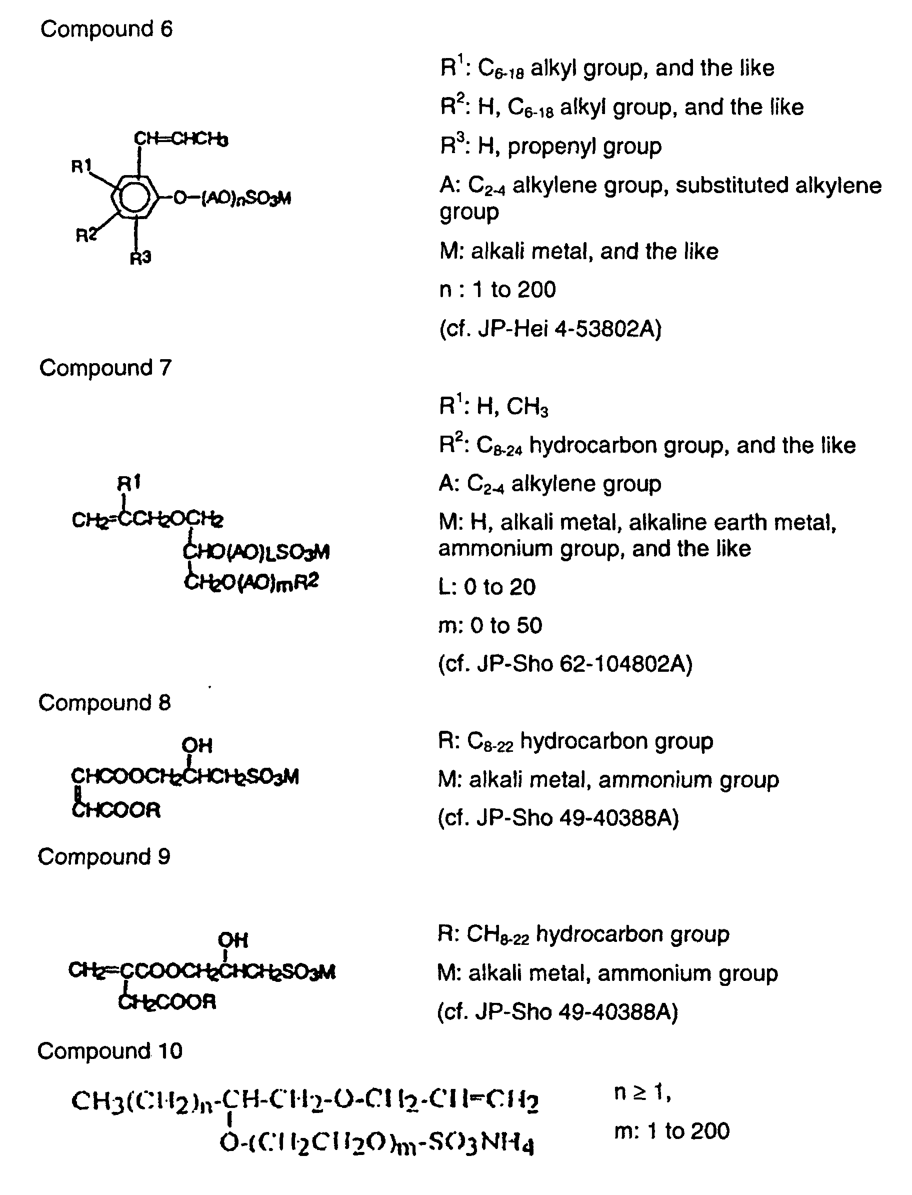

For the purpose of the present invention, the use of said radically polymerizable emulsifier having a sulfonic acid group is necessary in terms of preparing synthetic resin emulsions having a very small particle diameter.

According to the present invention, preferred among radically polymerizable emulsifiers having sulfonic acid groups is the use of a styrene sulfonate in its own or a combination thereof with other radically polymerizable emulsifiers having sulfonic groups in terms of preparing more stable synthetic resin emulsions having a very small particle diameter.
Furthermore, in addition to said radically polymerizable emulsifier, radically polymerizable emulsifiers without any sulfonic acid group and/or other emulsifiers of, e.g., anionic or nonionic nature without any radically polymerizable unsaturated bonds can also be used in combination.

As the radically polymerizable emulsifiers without any sulfonic acid, any suitable one can be selected from the known class of substances and may be, for example, of anionic or nonionic nature. Specific examples thereof may be compounds 11-16 as shown below:

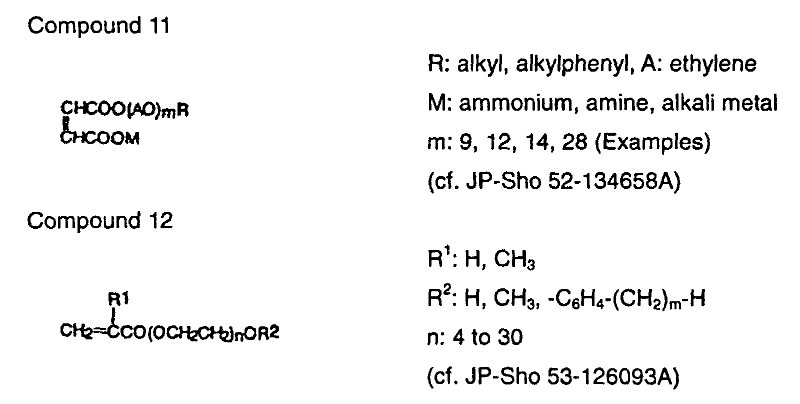

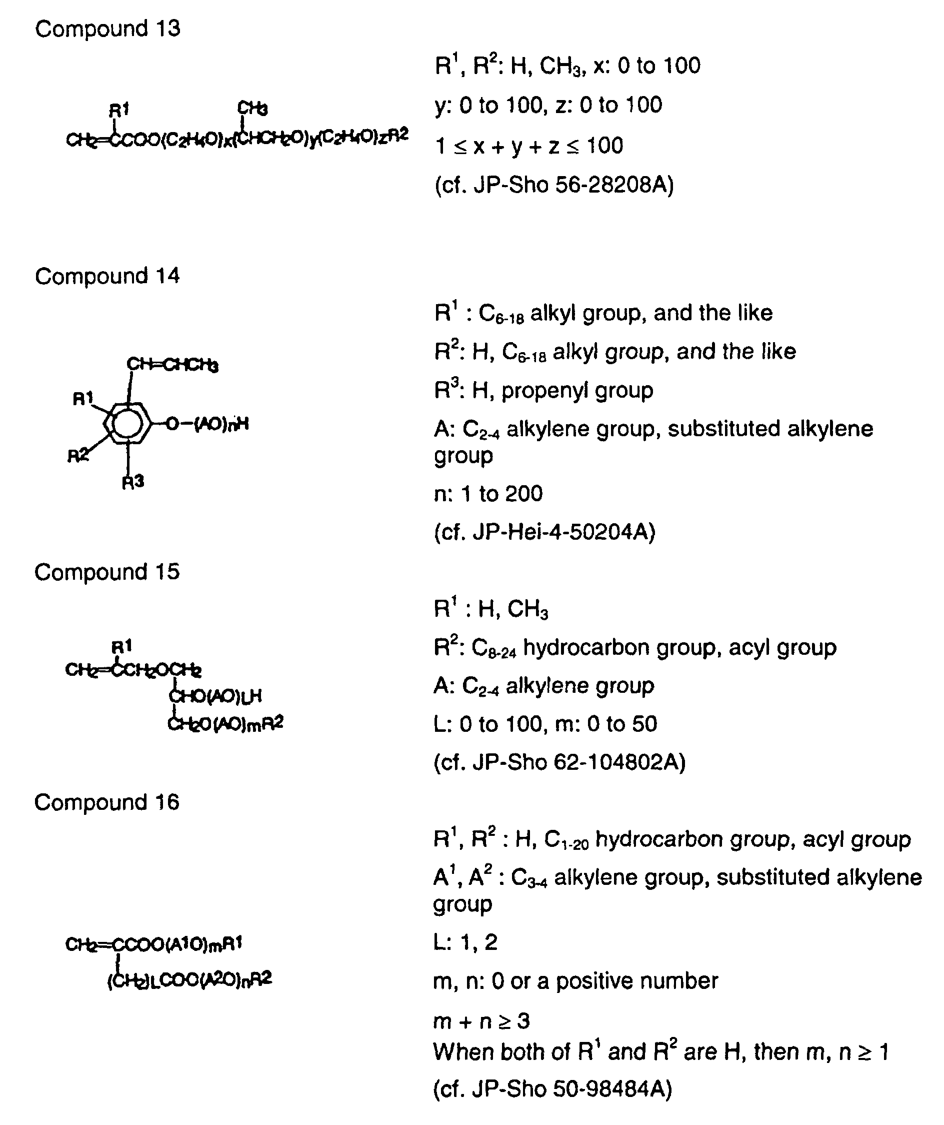

As said other emulsifiers of anionic nature without any radically polymerizable unsaturated bond, mention can be made of, for example, sodium alkylbenzenesulfonates, sodium alkylsulfonates, sodium polyoxyethylenealkylether sulfonates, or corresponding phosphates, and the like.

As said nonionic emulsifiers without any radically polymerizable unsaturated bond, mention can be made of, for example, polyoxyethylene alkyl ethers, polyoxyethylene alkyl esters, polyoxyethylene- or polyoxypropylene glycols and the like.

These emulsifiers can be introduced all at once at the initial polymerization stage; or, for part of the total amount, added dropwise during the polymerization or mixed with monomers to give emulsified monomers for use in the polymerization, or else used in a manner of any combination thereof. According to the present invention, it is preferred to mix these emulsifiers with monomers and use these in the form of emulsified monomers in the polymerization in terms of polymerization stability and particle size control.

In particular, according to the present invention, it is a requisite to use said emulsifier (A) which contains a radically polymerizable emulsifier having sulfonic acid groups, and the amount of (A) used is 0.5 to 5.0 % by weight based on the nonvolatile content. The total amount of the emulsifiers used is 1.0 to 5.0 % by weight based on the nonvolatile content.

If the amount of the radically polymerizable emulsifier having sulfonic acids is less than 0.5 % by weight, the reaction cannot be completed, the reaction system can be unstable and, further, the particles can agglomerate to each other, thereby not producing synthetic resin emulsions having a very small particle diameter. Meanwhile, if non-radically polymerizable emulsifiers are used more than necessary in order to prevent the above problem, the emulsifiers can liberate over the coating layer, causing inks blurring. In the contrary, if the amount exceeds 5.0 % by weight, the water resistance may decrease.

### <Monomer components>

The unsaturated monomer (B) having silyl groups used according to the present invention undergoes the hydrolysis of the silyl groups and, owing to its unsaturated bond, assumes a crosslinked structure. Therefore, not only the anti-scratching property of the surface of film can be improved, but also it is expected to obtain such an effect that inorganic components, such as silicon, are coupled with the polymer. In addition, according to the present invention where colloidal silica is used, the polymer chemically binds with the colloidal silica, which allows the utilization of the features of both inorganic and organic materials. Further, it is possible to form a film in which the silica does not easily fall from the coating layer. Specifically, flexible and stable films good in water resistance and temperature resistance are obtained.

As the unsaturated monomer (B) having silyl groups, mention can be made of silyl group-containing polymerizable unsaturated monomers of the following general formula (1): 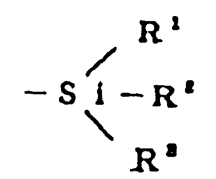 in which R¹, R² and R³ may be identical to or different from each other and denote a halogen atom, an alkyl group, an aryl group, an aralkyl group, an alkoxy group, an aryloxy group, an acyloxy group, a hydroxyl group, an amino group, an aminooxy group or an alkylthio group.

As the radicals R¹, R² and R³ which are elements of said silyl group, various chemical groups can be selected from those mentioned above, but, in general, it is preferable that at least one of R¹, R² and R³ is a halogen atom, an alkoxy group or a hydroxyl group.

As used herein, the term "halogen atom" includes fluorine, chlorine, bromine and iodine, but, in general, preference being given to a chlorine atom. As suitable examples of the alkyl group, mention can be made of a C₁-C₁₀ alkyl group, such as methyl, ethyl, propyl, butyl, pentyl or hexyl. As suitable examples of the aryl group, mention can be made of a C₆-C₁₀ aryl group, such as phenyl; and, for the aralkyl group, of a C₇-C₁₀-aralkyl group, such as benzyl.

As suitable examples of the alkoxy group, mention can be made of a C₁-C₁₆-alkoxy group, such as methoxy, ethoxy, propoxy, isopropoxy, butoxy, isobutoxy, t-butoxy, pentyloxy, hexyloxy, octyloxy, decyloxy or dodecyloxy, but preference being given to a C₁-C₄-alkoxy and particular preference being given to methoxy and ethoxy. In this connection, the alkoxy group also includes an alkoxy-alkoxy group, such as methoxy-ethoxy. Furthermore, as suitable examples of the aryloxy group, mention can be made of a C₆-C₁₀ aryloxy group, such as phenoxy; and, for the acyloxy group, of a C₂-C₆ acyloxy group, such as acetyloxy (acetoxy), propionyloxy, butyryloxy.

The amino group also includes those which may have substituents, such as dimetylamino, and the aminooxy group also includes those which may have substituents, such as dimethylaminooxy, suitable examples thereof, which can be mentioned, being dimethylaminooxy and diethylaminooxy. As suitable examples of the alkylthio group, mention can be made of a C1-6 alkylthio group, such as methylthio, ethylthio.

The unsaturated monomer (B) having silyl groups includes monomers as mentioned below, for example.

### (a) Halogen-containing monomers

(a-1) Compounds of the general formula (2): 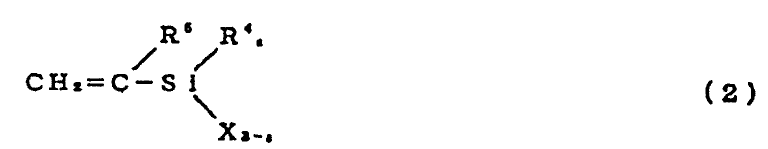 in which R⁴ denotes a C₁-C₁₀ alkyl group, a C₆-C₁₀ aryl group or C₇-C₁₀ aralkyl group, R⁵ denotes a hydrogen atom or a methyl group, X denotes a fluorine, chlorine, bromine or iodine atom and a is an integer of 0 to 2.
   As specific examples of the compounds of the general formula (2), mention can be made of vinyltrichlorosilane, vinylmethyldichlorosilane, vinyldimethylchlorosilane, vinylmethylphenylchlorosilane, isopropenyltrichlorosilane, isopropenylmethyldichlorosilane, isopropenyldimethylchlorosilane, isopropenylmethylphenylchlorosilane and the like.
(a-2) Compounds of the general formula (3): 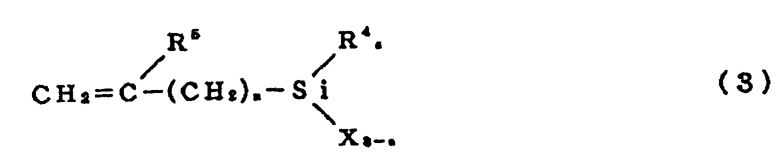 in which R⁴, R⁵, X and a are as mentioned above, and n is an integer of 1 to 12.
   As specific examples of the compounds of the general formula (3), mention can be made of allyl trichlorosilane, allyl methyldichloromethane, allyl dimethylchloromethane and the like.
(a-3) Compounds of the general formula (4): 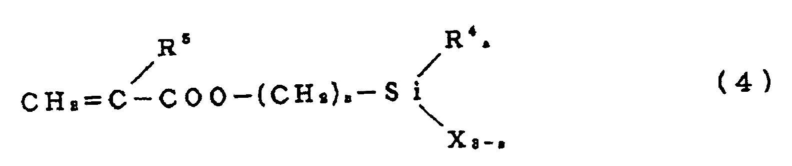 in which R⁴, R⁵, X, a and n are as mentioned above.
   As specific examples of the compounds of the formula (4), mention can be made of 2-(meth)acryloxyethyltrichlorosilane, 3-(meth)acryloxypropyl trichlorosilane, 2-(meth)acryloxyethyl methyldichlorosilane, 3-(meth)acryloxyproyl methyldichlorosilane, 2-(meth)acryloxyethyl dimethylchlorosilane, 3-(meth)acryloxypropyl dimethylchlorosilane and the like.

### (b) Alkoxy- or aryloxy-containing monomers

(b-1) Compounds of the general formula (5) 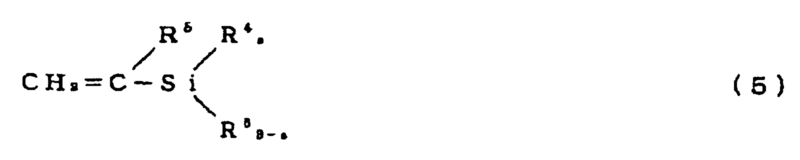 in which R⁴, R⁵ and a are as mentioned above, and R⁶ denotes a C₁-C₁₆ alkoxy group.
   As specific examples of the compounds of the formula (5), mention can be made of vinyl trimethoxysilane, vinyl triethoxysilane, vinyl tributoxysilane, vinyl (hexyloxy)silane, vinyl tri(dodecyloxy)silane, vinyl dimethoxymethylsilane, vinyl ethoxydimethylsilane, vinyl butoxydimethylsilane, vinyl diphenylethoxysilane, isopropenyl trimethoxysilane, isopropenyl triethoxysilane, isopropenyl tributoxysilane, isopropenyl tri(hexyloxy)silane, isopropenyl tri(octyloxy)silane, isopropenyl tri(dodecyloxy)silane, isopropenyl dimethoxymethylsilane, isopropenyl methoxydimethylsilane, isopropenyl ethoxydimethylsilane, isopropenyl butoxydimethylsilane, vinyl tris(2-methoxyethoxy)silane and the like.
(b-2) Compounds of the general formula (6) 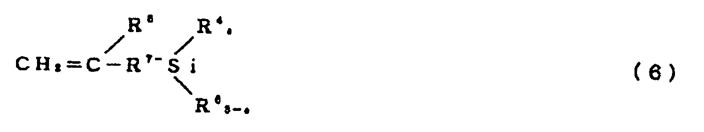 in which R⁴, R⁵, R⁶ and a are as mentioned above, and R⁷ denotes either an alkylene group or a phenylene group.
   As specific examples of the compounds of the general formula (6), mention can be made of allyl trimethoxysilane, vinyldecyl trimethoxysilane, vinyloctyl trimethoxysilane, vinylphenyl trimethoxysilane, vinylphenyl dimethoxymethylsilane, vinylphenyl methoxydimethylsilane, isopropenylphenyl trimethoxysilane, isopropenylphenyl dimethoxymethylsilane and isopropenylphenyl methoxydimethylsilane and the like.
(b-3) Compounds of the general formula (7) 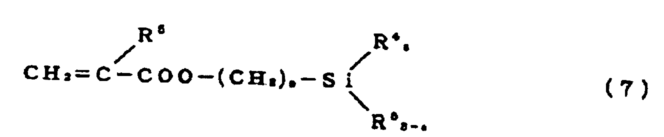 in which R⁴, R⁵, R⁶, a and n are as mentioned above.
   As specific examples of the compounds of the general formula (7), mention can be made of 2-(meth)acryloxyethyl trimethoxysilane, 2-(meth)acryloxyethyl triethoxysilane, 3-(meth)acryloxypropyl trimethoxysilane, 3-(meth)acryloxypropyl trimethoxysilane, 3-(meth)acryloxypropyl methyldimethoxysilane, 3-(meth)acryloxypropyl tris(2-methoxyethoxy)silane and the like.
(b-4) Compounds of the general formula (8) 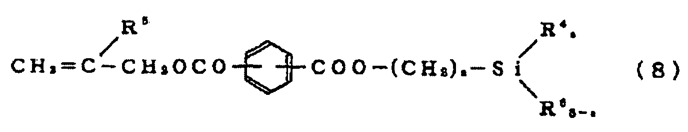 in which R⁴, R⁵, R⁶, a and n are as mentioned above.
   As specific examples of the compounds of the general formula (8), mention can be made of 3-[2-(allyoxycarbonyl)phenylcarbonyloxy]propyl dimethoxymethylsilane, 3-[2-(allyloxycarbonyl)phenylcarbonyloxy]propyl methoxydimethylsilane, 3-[2-(allyoxycarbonyl)phenylcarbonyloxy]propyl trimethoxysilane, 3-[2-(isopropenylmethoxycarbonyl)phenylcarbonyloxy]propyl dimethoxymethylsilane and 3-[2-(isopropenylmethoxycarbonyl)phenylcarbonyloxy]propyl methoxydimethylsilane and the like.
(b-5) Compounds of the general formula (9) 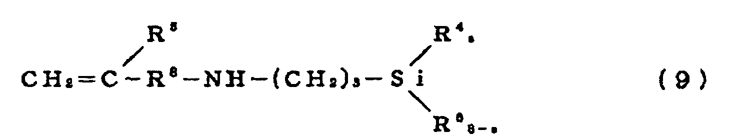 in which R⁴, R⁵, R⁶ and a are as mentioned above, and R⁸ denotes a phenylene group or 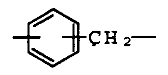
   As specific examples of the compounds of the general formula (9), mention can be made of 3-(vinylphenylamino)propyl trimethoxysilane, 3-(vinylphenylamino)propyl triethoxysilane, 3-(vinylbenzylamino)propyl triethoxysilane, 3-(vinylbenzylamino)propyl triethoxysilane and the like.
(b-6) Compounds of the general formula (10) 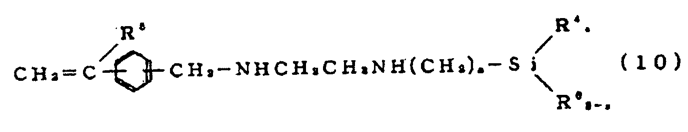 in which R⁴, R⁵, R⁶ and a are as mentioned above.
   As specific examples of the compounds of the general formula (10), mention can be made of 3-[2-(N-vinylphenylmethylamino)ethylamino]propyl trimethoxysilane, 3-[2-(N-isopropenylphenymethylamino)ethylamino]propyl trimethoxysilane and the like.
(b-7) Compounds of the general formula (11) 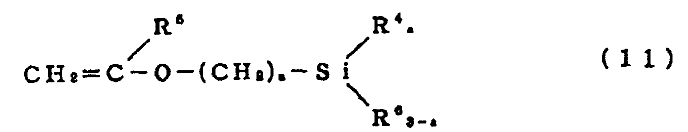 in which R⁴, R⁵, R⁶, a and n are as mentioned above.
   As specific examples of the compounds of the general formula (11), mention can be made of 2-(vinyloxy)ethyl trimethoxysilane, 3-(vinyloxy)propyl trimethoxysilane, 4-(vinyloxy)butyl triethoxysilane, 2-(isopropenyloxy)ethyl trimethoxysilane and the like.
(b-8) Compounds of the general formula (12) 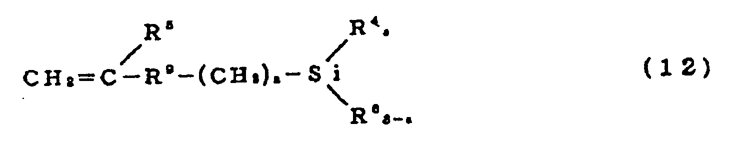 in which R⁴, R⁵, R⁶, a and n are as mentioned above, and R⁹ denotes -CH₂O- or -CH₂OCO-.
   As specific examples of the compounds of the general formula (12), mention can be made of 3-(allyloxy)propyl trimethoxysilane, 10-(allyoxycarbonyl)decyl trimethoxysilane, 3-(isopropenylmethyloxy)propyl trimethoxysilane, 10-(isopropenylmethyloxycarbonyl)decyl trimethoxysilane and the like.
(b-9) Compounds of the general formula (13) 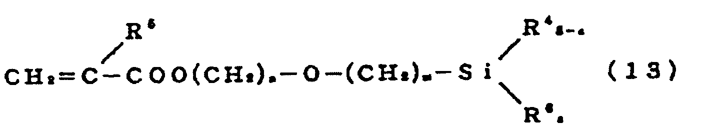 in which R⁴, R⁵, R⁶, n and a are as mentioned above and m is an integer of 1 to 12.
   As specific examples of the compounds of the general formula (13), mention can be made of 3-[(meth)acryloxyethoxy]propyl trimethoxysilane, 3-[(meth)acryloxyethoxy]propyl dimethoxymethylsilane and the like.

Furthermore, the unsaturated monomer (b) having silyl groups, in addition to those mentioned above, may include divinyl group-containing monomer, such as divinyldimethoxysilane, divinyldiethoxysilane, divinyldi(β-methoxyethoxy)silane and the like, for example. It is preferable that such a silyl group-containing monomer (A1) contains a vinyl monomer which has, for example, alkoxysilyl groups, in terms of the handling, economy, control of side-reactions and others.

According to the present invention, these unsaturated monomers (B) can be used alone, respectively, or in a combination of two or more of these monomers. According to the present invention, particularly preferred among these monomers is the use of vinyltriethoxysilane or 3-methacryloxylpropyl triethoxysilane in terms of their polymerizability. The amount of the radically polymerizable unsaturated monomer (B) having silyl groups used is suitably 0.1 to 15 parts by weight, preferably 0.5 to 10 parts by weight, based on the total nonvolatile content.

The chemical binding with colloidal silica under the use of said radically polymerizable unsaturated monomer having silyl groups can effectively prevent the falling of silica from the coating layer, but the amount of said monomer is less than 0.1 % by weight, the composite-formation with colloidal silica becomes insufficient and the water resistance and adhesion may deteriorate. On the other hand, an amount of more than 15 % by weight may cause unstable polymerization, a large amount of agglomerates, increased viscosities and others.

### (C) Unsaturated monomers having six-membered rings as side chains

The present invention uses, as the main monomer, an unsaturated monomer having six-membered rings as side chains. In this connection, said six-membered ring means, for example, phenyl, cyclohexyl or the like and specific examples thereof include styrene, α-methylstyrene, cyclohexylacrylate, cyclohexylmethacrylate and the like.

The amount thereof used is 59 to 98 % by weight based on the total nonvolatile content of the synthetic resin emulsion. An amount of less than 59 % by weight not only adversely affects the water-resistance and anti-blocking property, but also does not produce any dense film excellent in the color-development. An amount of more than 98 % by weight, in turn, leads to less amounts of the emulsifier and the silyl group-containing unsaturated monomer and, thereby, causes the polymerization to unstably proceed, or provides an insufficient composite-formation with colloidal silica and, thus, results in a tendency for silica to fall down from the coating layer, consequently not producing any good films.

### (D) Other unsaturated monomer copolymerizable with (B) and (C)

Other unsaturated monomers (D) copolymerizable with (B) and (C), which can be optionally used according to the present invention, may be, without any limitation, any ones used in conventional emulsion-polymerization.

They comprise a monomer (D-1) which forms the backbone of the synthetic resin and a functional monomer (D-2) which modifies the synthetic resin and provides further functions thereto.

As the monomer (D-1) which forms the backbone, mention can be made of alkyl (meth)acrylates, olefins, vinyl ethers and the like, for example.

More specifically, as said alkyl (meth)acrylates, mention can be made of alkyl (meth)acrylates having C₁-C₁₂-alkyl, such as methyl, ethyl, n-butyl, t-butyl, propyl, 2-ethylhexyl, octyl and the like.

As the olefins, mention can be made of ethylene, propylene and the like; and, for the vinyl esters, of vinyl acetate, a vinyl ester of branched carboxylic acid, vinyl laurate and the like.

Furthermore, as said functional monomer (D-2) which modifies the synthetic resin to impart functions such as storage stability, water resistance, chemical resistance, weather resistance, adhesion and the like, mention can be made of, for example, those ethylenically unsaturated carboxylic acids (D-2a) which improve the storage stability and adhesion; those monomers (D-2b) having two or more radically polymerizable unsaturated bonds which improve the water-resistance, weather-resistance, chemical resistance, adhesion and others; and those monomers (D-2-others) having, as a side chain, an amide group, a nitrile group, a hydroxyl group, a glycidyl group, a methylol group, a carbonyl group, a quaternary ammonium salt, an ethylene oxide chain or chlorine.

As said ethylenically unsaturated carboxylic acids (D-2a), mention can be made of acrylic acid, methacrylic acid, crotonic acid, maleic acid and the like.

As monomer (D-2b) having two or more radically polymerizable unsaturated bonds, mention can be made of divinyl compounds, di(meth)acrylate compounds, tri(meth)acrylate compounds, tetra(meth)acrylate compounds, diallyl compounds, triallyl compounds, tetraallyl compounds and the like; and, more specifically, of divinylbenzenes, divinyl adipate, ethylene glycol di(meth)acrylate, diethylene glycol di(meth)acrylate, triethylene glycol di(meth)acrylate, polyethylene glycol di(meth)acrylate, polypropylene glycol di(meth)acrylate, neopentyl glycol di(meth)acrylate, 1,3-butylene glycol di(meth)acrylate, 1,3-butyl di(meth)acrylate, trimethylolethane tri(meth)acrylate, trimethylolpropane tri(meth)acrylate, dipentaerythrit tri(meth)acrylate, diallyl phthalate, triallyl dicyanurate, tetraallyloxyethane and the like.

For said other functional monomers (D-2-others), mention can be made of, as monomers having hydroxyl groups, hydroxyethyl methacrylates, hydroxyethyl acrylates, hydroxypropyl methacrylates, hydroxypropyl acrylates, hydroxybutyl methacrylates, hydroxybutyl acrylates and the like; and of, as monomers having amide groups, acrylamide, methacrylamide and the like; and of, as monomers having nitrile groups, acrylonitrile and the like; and of, as monomers having chlorine as a side group, vinyl chloride, vinylidene chloride and the like; and of, as monomers having glycidyl groups, glycidyl methacrylate and glycidyl acrylate; and of, as monomers having methylol groups, N-methylolacrylamide and the like; and of, as monomers having carbonyl groups, acetacetoxyethyl methacrylate and the like.

According to the present invention, preferred as monomer (D-1) are alkyl (meth)acrylates and vinyl esters of branched carboxylic acids. They may be used alone, respectively, but, more preferably, in a combination of two or more of these monomers in terms of the water resistance, weather resistance, polymerization stability and others.
As functional monomers (D-2), preference is given to the use of ethylenically unsaturated carboxylic acids. Ethylenically unsaturated carboxylic acids readily undergo orientation over the surfaces of the synthetic resin emulsion particles, neutralize part of the hydroxyl groups with the formation of an electric double layer and, thereby, contribute to the dispersion stability of emulsion particles.
In this connection, when using component (D), at least one component can be selected from those mentioned above, but it is preferable that at least one component selected from alkyl (meth)acrylates, vinyl esters of branched carboxylic acids and ethylenically unsaturated carboxylic acids is used.

The amount of component (D) used is 0 to 39 % by weight based on the total nonvolatile content of the synthetic resin emulsion. Without such component (D), the polymerization stability and storage stability may deteriorate to some extent, but if it is used exceeding 39 % by weight, the proportion of component (C) correspondingly decreases and, due to this, films having a good color-developability cannot be obtained.

### <Other components used in polymerization>

The emulsion polymerization according to the present invention may be conducted in an aqueous medium with the addition of other known components. In this case, among others, polymerization initiators are used. In addition, if desired, further other components, such as protective colloid, chain transfer agents, pH regulators, ultraviolet absorbers, photooxidation inhibitors and others, may be used in suitable amounts, if desired.

Polymerization initiators radically decompose under the action of heat or reducing substances and, thereby, cause the addition polymerization of monomers to proceed. They may be water-soluble or oil-soluble persulfates, peroxides, azobis compounds and the like, for example potassium persulfate, ammonium persulfate, t-butyl hydroperoxide, hydrogen peroxide, azobisisobutylnitrile (AIBN), rongalit, sodium metabisulfite and the like. They can be used alone, respectively, or in a combination of two or more of these compounds. If desired, these polymerization initiators can be combined with transition metal ions. For such transition metal ions, the use of Fe(II) sulfate, Cu(II) chloride, Fe(II) chloride and the like is preferable.

The protective colloid may be, without any limitation, any known one conventionally used in emulsion-polymerization. For example, mention can be made of polyvinyl alcohol and derivatives thereof, cellulose ethers and derivatives thereof, starch derivatives and the like, which are primarily used in the form of an aqueous solution.

As the chain transfer agent, any suitable one can be, without any limitation, selected from known products. Examples thereof include alcohols such as methanol, ethanol, propanol, butanol and the like; carboxylic acids having 2 to 8 carbon atoms such as acetone, methyl ethyl ketone, cyclohexane, acetophenone, acetaldehyde, propionaldehyde, n-butylaldehyde, furfural, benzaldehyde and the like; mercaptans such as dodecylmercaptan, laurylmercaptan, n-mercaptan, thioglycolic acid, octyl thioglycolate, thioglycerol and the like. They may be used either alone, respectively, or in a combination of two or more of these compounds.

As the pH-controlling agent, mention can be made of known substances, such as ammonia, sodium hydroxide, potassium hydroxide and the like.

The ultraviolet absorber is also not limited to any particular type, but benzophenone derivatives and benzotriazole derivatives are suitably used. It also includes those having radically polymerizable unsaturated bonds, which are preferable because they are compolymerized with synthetic resin components.

As the photooxidation inhibitor, hindered phenols and hindered piperidines are suitably used. Like said ultraviolet absorber, it also includes those having radically polymerizable bonds, which are preferable also in this case because they are compolymerized with synthetic resin components.

The synthetic resin emulsion according to the present invention can be obtained in known emulsion polymerization methods, such as a batch polymerization method wherein all the components are introduced into a reactor at once; a dropping polymerization method wherein an emulsifier, water as the medium and part of the monomers are first subjected to an initial polymerization and, then, the remaining emulsifiers and monomers are added dropwise; and, further, an emulsified-monomer dropping method wherein the components to be added dropwise are preliminarily emulsified and dispersed in water. According to the present invention, it is preferable to use said emulsified-monomer dropping method in order to obtain a finely divided synthetic resin emulsion.

Moreover, it is also possible to use a multi-stage polymerization method wherein the monomer composition is changed step by step during the polymerization stage, or a power-feed polymerization method wherein the monomer composition is continuously changed, or a seeding polymerization, or the like, in any suitable combination.

It is necessary for the mean particle diameter of the synthetic resin emulsion according to the present invention to be 100 nm or less, preferably 80 nm or less and, more preferably, 50 nm or less. Having such a particle diameter of 100 nm or less, films which are denser and have no cloud can be obtained, leading a print image with an excellent color developed.

The determination of mean particle diameter can be carried out by means of known measurement instruments. For example, Nicomp370/photon correlation spectroscopy (Particle diameter distribution measuring instrument; PACIFIC SCIENTIFIC Company) and the like can be used.

The present invention is featured by the use of said synthetic resin emulsion together with colloidal silica.

Colloidal silica is a silica sol with ultrafine particles colloidally dispersed in water, and the diameter of its primary particle is 100nm or less, in particular 50 nm or less and, usually, in the range of 5 to 100 nm.

According to the present invention, any commercially available products can be used as colloidal silica, and the colloidal silica may be surface-treated with a metal ion such as a meta-aluminate ion and the like, or may be a mono-disperse system, or the particles thereof may be connected to each other in the form of a chain or of a branch by a special treatment. Among these, those surface-treated with a metal ion such as a meta-aluminate ion and the like are particularly preferable because they show an excellent stability during mixing and do not have tendencies to agglomerate.

The amount of colloidal silica used is preferably 100 to 900 % by weight and, more preferably, 100 to 500 % by weight relative to the synthetic resin emulsion based on the nonvolatile content.

### <Other components added to the coating composition>

In the coating composition according to the present invention, various pigments, dyes, coloring pigment thickening agents, pH regulators, surfactants, dispersants, antifoaming agents, anti-freezing agents, releasing agents, ultraviolet absorbers, photooxidation inhibitors and the like, which can be used in aqueous coating compositions, can be added, if necessary, for modifying or improving the whiteness, viscosity, flowability, miscibility, preservability, weather resistance, workability and the like.

An ink jet recording medium is obtained by applying the coating composition according to the present invention as a gloss layer followed by drying it. In this operation, the material and structure of the substrate and the ink fixation layer are not limited to particular types, and any substrates and ink-fixation layers generally used in ink jet printing media can be used without any limitation. For example, in order to impart a gloss, a gloss layer according to the present invention is applied over a medium comprising a substrate with an ink-receiving capacity provided in itself, such as paper, films or cloth, in a known coating method (comma coater, blade coater, air-knife coater, and the like), dried and subjected to a treatment which imparts a gloss thereon.

In order to impart an ink-receiving capacity to a substrate, a composition comprising pigments, binders, cationic substances having an ink fixing ability and others is coated on a substrate to provide an ink fixation layer. In the case of paper, cloth and the like, pigments, binders, cationic surfactants capable of fixing inks, and others can be impregnated into such substrates or added during the paper making stage, so that at least part, or all, of these components can be included in the inside of such substrates.

As the pigment, mention can be made of, for example, inorganic pigments such as zinc oxide, titanium oxide, calcium carbonate, silicic acid, silicates, clay, talc, mica, calcined clay, aluminum hydroxide, barium sulfate, lithopone, silica, colloidal silica and the like; plastic pigments processed into the form of a sphere, hollow body or other various shapes and structures, comprising polystyrene, polyethylene, polypropylene, epoxy resins, acrylic resins, acryl-styrene copolymers and the like.

As the binder, synthetic and natural polymers can be used, for example, polyvinyl alcohol, modified polyvinyl alcohols, starch and derivatives thereof, cellulose ethers and derivatives thereof, sodium polyacrylates, polyvinylpyrrolidones, acrylamide copolymers, (meth)acrylic acid copolymers, polyethylene glycols, polyvinyl acetates, polyurethanes, urethane-acryl copolymers, ethylene-vinyl acetate copolymers, vinyl chloride-vinyl acetate copolymers, styrene-butadiene copolymers, styrene-butadiene-acrylic copolymers, glue, casein, soybean protein, gelatin, sodium alginate and the like.

The amount of the coating layer composition according to the present invention to be coated as a gloss layer (cast-coat amount) is preferably 5 to 50 g/m², more preferably 7 to 35 g/m², based on the nonvolatile content.

A drying and gloss-imparting method after coating may comprise drying with hot air, calendering, casting and the like. More specifically, it is preferable that casting is conducted with a temperature setting of the cast rolls of 60 to 100°C while the coating composition is still wet after being coated.

The ink jet recording medium thus obtained has an extremely outstanding performance in the points that it possesses a high gloss, weather resistance and ability to follow the change in stress occurred by bending, and a combined high ink-receiving ability and clear color-development and, further, effectively prevents falling of silica from the coating layer which can be frequently observed particularly in the case of a high amount of silica incorporated.

### Examples

### Production Example 1

A polymerization vessel was charged with 380 parts by weight of water, 2.0 parts by weight of a sodium alkylallylsulfosuccinate and 1.0 part by weight of a styrene sulfonic acid, stirred to dissolve the components, and heated to 80 °C. Then, 15 parts by weight of 2% potassium persulfate were added as an initiator for the polymerization. At the same time, 97 parts by weight of a monomer mixture previously prepared from 2.0 parts by weight of vinyltriethoxysilane, 79.0 parts by weight of styrene, 3.0 parts by weight of methacrylic acid and 13.0 parts by weight of methyl methacrylate was divided into four portions, these portions were added to the polymerization vessel sequentially at an interval of 30 minutes and the polymerization reaction of the monomer mixture was allowed to proceed over a total period of time of 2 hours. After the completion of the addition, the reaction mixture was matured for 1 hour, giving a blue-white synthetic resin emulsion.

To the synthetic resin emulsion were added 2.5 parts by weight of a 10% aqueous ammonia solution, thereby adjusting the pH to about 9. The mean particle diameter of the resulting synthetic resin emulsion was about 35 nm as measured by Nicomp370/photon correlation spectroscopy (Particle diameter distribution measuring instrument; PACIFIC SCIENTIFIC Company).

### Production Examples 2-5

These Examples were conducted as described in Production Example 1, except that the amounts and types of emulsifiers (component A) added to the reaction vessel and also the types of monomer mixtures added were as shown in Table 1.

### Production Example 6

A polymerization vessel was charged with 200 parts by weight of water, 1.0 part by weight of a sodium alkylallylsulfosuccinate, 1.0 part by weight of a styrene sulfonic acid and 1.0 part by weight of sodium triisobutylphenolether sulfonate, stirred to dissolve the components and heated to 80 °C. Then, 15 parts by weight of 2% potassium persulfate were added as an initiator for the polymerization reaction. At the same time, a monomer composition as shown below previously prepared was added dropwise over the course of 2 hours to allow the polymerization reaction to proceed. After the completion of the addition, the reaction mixture was matured for 1 hour, giving a blue-white synthetic resin emulsion.

To the synthetic resin emulsion were added 2.5 parts by weight of a 10% aqueous ammonia solution, thereby adjusting the pH to about 9. The mean particle diameter of the resulting synthetic resin emulsion was about 60 nm as measured by Nicomp370/photon correlation spectroscopy (Particle diameter distribution measuring instrument, PACIFIC SCIENTIFIC Company).

| | |
|---|---|
| Water | 180 parts by weight |
| Polyoxyalkylene alkylpropenylphenyl ether sulfuric ester salt | 1.0 part by weight |
| Polyoxyethylene nonylphenylether | 1.0 part by weight |
| Methyl methacrylate | 10 parts by weight |
| Methacrylic acid | 5 parts by weight |
| Styrene | 45 parts by weight |
| α-Methylstyrene | 32 parts by weight |
| Vinyltriethoxysilane | 3 parts by weight |

### Production Examples 7 and 8

These Examples were conducted as described in Example 6, except that the amounts and types of emulsifiers (component A) added to the reaction vessel, the amounts and types of emulsified monomers added dropwise, and the amounts and types of monomers were as shown in Table 1.

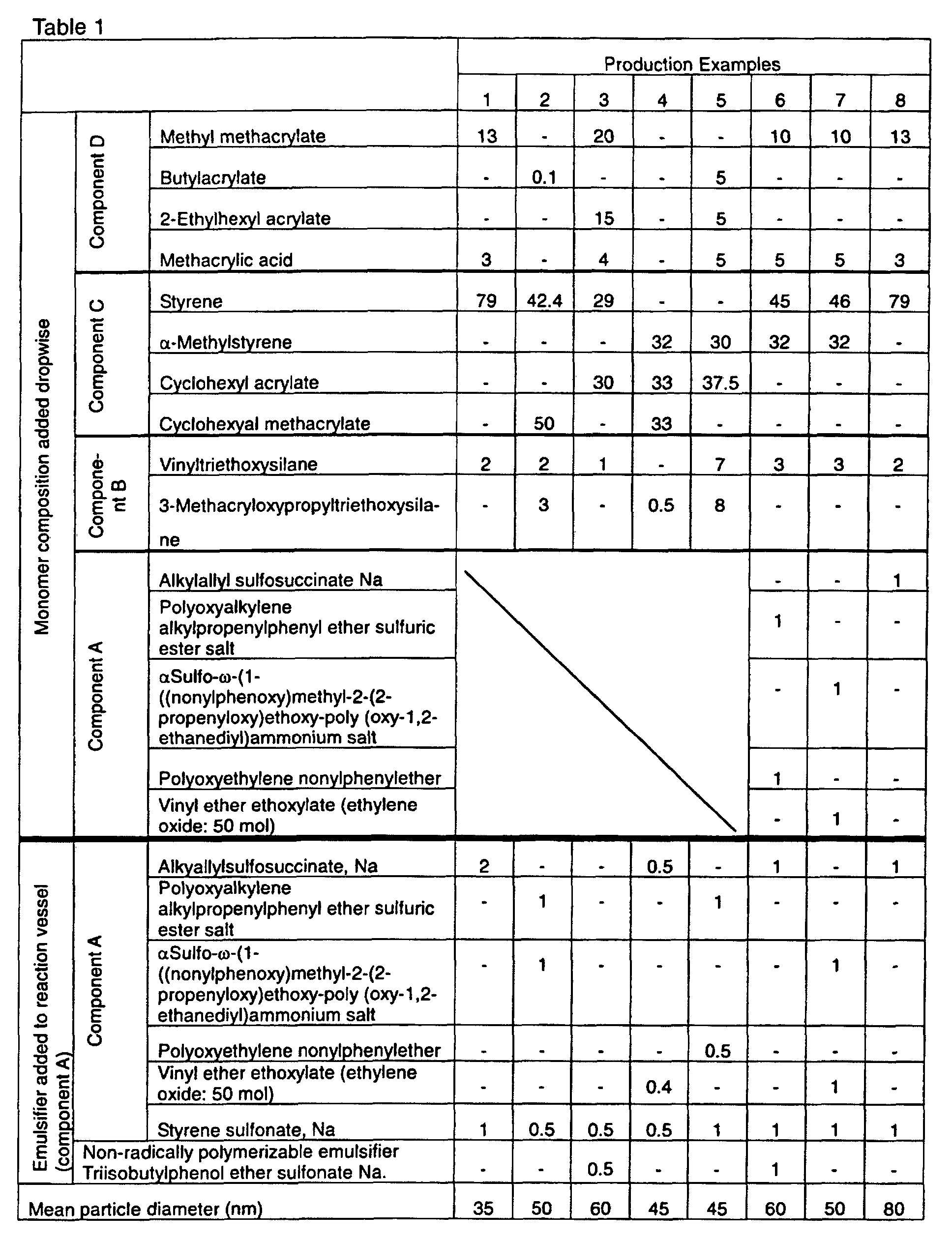

### Comparative Production Example 1

A polymerization vessel was charged with 380 parts by weight of water, 2.0 parts by weight of a sodium alkylallylsulfosuccinate and 1.0 part by weight of a styrene sulfonic acid, stirred to dissolve the components and heated to 80 °C. Then, 15 parts by weight of 2% potassium persulfate were added as an initiator for the polymerization reaction. At the same time, 97 parts by weight of a monomer mixture previously prepared from 2.0 parts by weight of vinyltriethoxysilane, 47.0 parts by weight of styrene, 3.0 parts by weight of methacrylic acid and 45.0 parts by weight of methyl methacrylate was divided into four portions, and these portions were sequentially added to the vessel at an interval of 30 minutes, and the polymerization reaction of the monomer mixture was allowed to proceed for a total period of time of 2 hours. After the completion of the addition, the reaction mixture was matured for 1 hour, giving a blue-white synthetic resin emulsion.

To the synthetic resin emulsion were added 2.5 parts by weight of a 10% aqueous ammonia solution, thereby adjusting the pH to about 9. The mean particle diameter of the resulting synthetic resin emulsion was about 45 nm as measured by Nicomp370/photon correlation spectroscopy (Particle diameter distribution measuring instrument, PACIFIC SCIENTIFIC Company).

### Comparative Examples 2-4

These Examples were conducted as described in Comparative Production Example 1, except that the amounts and types of emulsifiers (component A) added to the reaction vessel, and also the types of monomer mixtures added were as shown in Table 2.

### Comparative Production Example 5

A polymerization vessel was charged with 200 parts by weight of water, 1.0 part by weight of α-sulfo-ω-(1-nonylphenoxy)methyl-2-(2-propenyloxy)ethoxy-poly(oxy-1,2-ethanediyl) ammonium salt and 1.0 part by weight of a polyoxyethylene nonylphenol ether, stirred to dissolve these components and heated to 80 °C. Then, 15 parts by weight of 2 % potassium persulfate were added as an initiator for the polymerization reaction. At the same time, an emulsified monomer composition as shown below previously prepared was added dropwise over the course of 2 hours to allow the polymerization to proceed. After the completion of the addition, the reaction mixture was matured for 1 hour, giving a blue-white synthetic resin emulsion.

To the synthetic resin emulsion were added 2.5 parts by weight of a 10 % aqueous ammonia solution, thereby adjusting the pH to about 9. The mean particle diameter of the resulting synthetic resin emulsion was about 100 nm as measured by Nicomp370/photon correlation spectroscopy (Particle diameter distribution measuring instrument, PACIFIC SCIENTIFIC Company).

| | |
|---|---|
| Water | 180 parts by weight |
| α-Sulfo-ω-(1-nonylphenoxy)methyl-2-(2-propenyloxy)ethoxypoly(oxy-1,2-ethanediyl) ammonium salt | 1.0 part by weight |
| Polyoxyethylene nonylphenyl ether | 1.0 parts by weight |
| Methyl methacrylate | 10 parts by weight |
| Methacrylic acid | 5 parts by weight |
| Styrene | 50 parts by weight |
| α-Methyl styrene | 32 parts by weight |
| Vinyltriethoxysilane | 3 parts by weight |

### Production Example 6

This Example was conducted as described in Comparative Production Example 5, except that the amounts and types of emulsifiers (component A) added to the vessel, the amount and types of emulsified monomers added dropwise, and the amounts and types of monomers were as shown in Table 2.

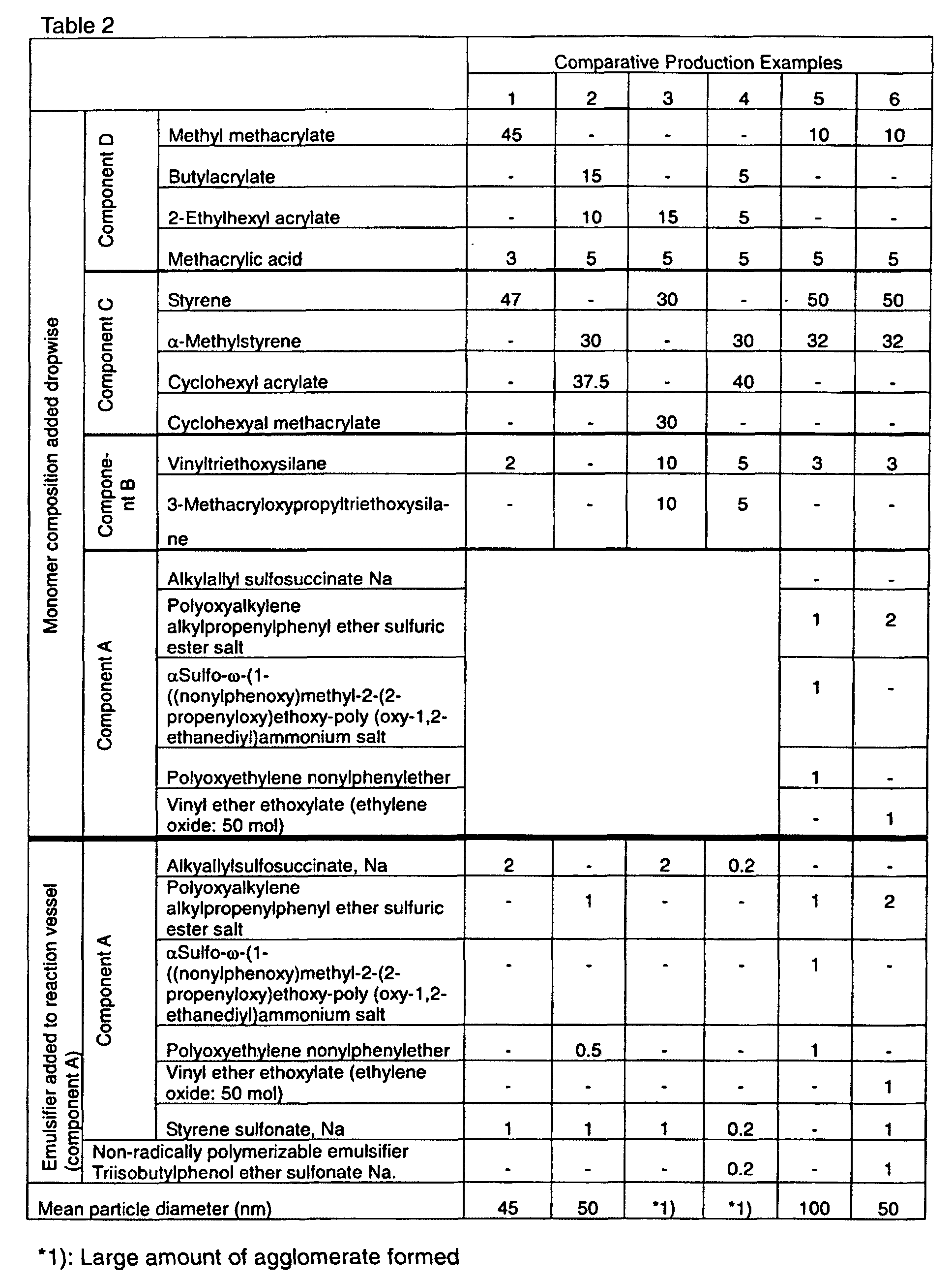

### Example 1

100 parts of the synthetic resin emulsion obtained in Production Example 1 were combined with 30 parts by weight of colloidal silica, in each case based on the respective nonvolatile contents, to form a composite, from which a coating composition was then prepared together with 5 parts by weight of a thickener and 2 parts by weight of a polyethylene wax as a releasing agent.

A fixation layer comprising a pigment, a binder and a cationic substance was provided on a paper substrate and, then, said coating liquid was applied over the surface of the fixation layer by means of a bar coater. The coated substrate was then directly brought into contact under pressure with a cast drum having a mirror surface at a surface temperature of 80°C, dried and released, giving an ink jet recording sheet having a gloss. The cast-coat amount in this case was 10 g/m² based on the nonvolatile content.

### Examples 2-8

These Examples were conducted as described in Example 1, except that the types of synthetic resin emulsions and the amounts of colloidal silica were as shown in Table 3.

### Evaluation:

For the ink jet recording sheets having a gloss thus obtained, the white paper glossiness and printability were evaluated. The results are shown in Table 4. The particulars of each test are as follows.

White paper glossiness: The gloss at 20°C was measured according to JIS-P8142, and evaluated using the following scales.
□: 30 or more
○: 20 or more and less than 30
□: 10 or more and less than 20
×: 10 or less
Printability: Ink jet printing (ISO/JIS-SCID JIS X9201-1995: N3) was conducted on an ink jet printer PM-900C manufactured by Seiko Epson Corporation, and the printability was evaluated visually.
The evaluation scales are as follows:
□: Wholly excellently printed and clear image obtained.
○: Having no image with whitish black parts.
□: Having an image with outstanding whitish black parts.
×, Having a wholly whitish image, and no longer suitable for practical use.

**Table 3**

| | Example No. | | | | | | | |
|---|---|---|---|---|---|---|---|---|
| | 1 | 2 | 3 | 4 | 5 | 6 | 7 | 8 |
| Synthetic resin emulsion used (100 parts by weight) | Pro.E. 1 | Pro.E.2 | Pro.E.3 | Pro.E.4 | Pro.E.5 | Pro.E.6 | Pro.E.7 | Pro.E.8 |
| Amount of colloidal silica | 300 | 300 | 500 | 10 | 100 | 500 | 300 | 900 |
| White paper glossiness | ○ | ○ | ○ | □ | □ | ○ | ○ | ○ |
| Printability | □ | □ | □ | ○ | ○ | □ | □ | □ |
| Pro.E = Production Example | | | | | | | | |

### Comparative Example 1

Without any composite formation with colloidal silica, a coating composition was prepared from 100 parts by weight, based on the nonvolatile content, of the synthetic resin emulsion from Production Example 1, 5 parts by weight of an thickener and 2 parts by weight of a polyethylene wax as a releasing agent.

An ink fixation layer comprising a pigment, a binder and a cationic substance was provided on a paper substrate and, then, said coating liquid was applied over the surface of the fixation layer by means of a bar coater. The coated substrate was then directly brought into contact under pressure with a cast drum having a mirror surface at a surface temperature of 80°C, dried and released. The releasing from the cast drum was not good.

### Comparative Example 2

100 parts by weight of the synthetic resin emulsion from Production Example 1 were combined with 1500 parts by weight of colloidal silica, based on the respective nonvolatile contents in each case, to form a composite, from which a coating composition was then prepared together with 5 parts by weight of a thickener and 2 parts by weight of a polyethylene wax as a releasing agent.

An ink fixation layer comprising a pigment, a binder and a cationic substance was provided on a paper substrate and, then, said coating liquid was applied over the surface of the fixation layer by means of a bar coater. The coated substrate was then directly brought into contact under pressure with a cast drum having a mirror surface at a surface temperature of 80°C, dried and released, giving an ink jet recording sheet having a gloss. The cast-coat amount in this case was 12 g/m² based on the nonvolatile content.

### Comparative Example 3

100 parts by weight of the synthetic resin emulsion from Production Example 1 were combined with colloidal silica having a mean particle diameter of the primary particles of 300 nm, based on the respective nonvolatile contents in each case, to form a composite, from which a coating composition was prepared together with 5 parts by weight of a thickener and 2 parts by weight of a polyethylene wax as a releasing agent.

An ink fixation layer comprising a pigment, a binder and a cationic substance was provided on a paper substrate and then said coating liquid was applied over the surface of the fixation layer by means of a bar coater. The coated substrate was then directly brought into contact under pressure with a cast drum having a mirror surface at a surface temperature of 80°C, dried and released, giving an ink jet printing sheet having a gloss. The cast-coat amount in this case was 12 g/m² based on the nonvolatile content.

### Comparative Examples 4-7

These Examples were conducted as described in Comparative Example 1, except that the types of synthetic resin emulsions and the amounts of colloidal silica were as shown in Table 4.

**Table 4**

| | Comparative Examples | | | | | | |
|---|---|---|---|---|---|---|---|
| | 1 | 2 | 3 | 4 | 5 | 6 | 7 |
| Synthetic resin emulsion used (100 parts by weight) | pro.E.1 | Pro.E.1 | Pro.E.1 | C.1 | C.2 | C.5 | C.6 |
| Amount of colloidal silica | 0 | 1500 | 300 | 500 | 500 | 500 | 300 |
| White paper glossiness | Not releasab le from drum | × | × | × | Gelled during formulation | ○ | □ |
| Printability | | × | □ | □ | | × | □ |
| Pro.E = Production Example C. = Comparative Example | | | | | | | |

The absence of any colloidal silica causes a problem in the productivity, such as difficulties in the sheet-releasing from cast drums.
The excessive use of colloidal silica or the use of those having too large particle diameters decreases the gloss.
Without any vinyl silanes, it was difficult to prepare a coating composition.

## Claims

1. A coating composition for an ink jet recording medium comprising a synthetic resin emulsion having a particle diameter of 100 nm or less and colloidal silica, said synthetic resin emulsion being obtained by, in the presence of (A) an emulsifier containing a radically polymerizable emulsifier having sulfonic acid groups, emulsion-polymerizing (B) an unsaturated monomer having silyl groups and (C) an unsaturated monomer having six-membered rings as side chains and, optionally, (D) another radically polymerizable unsaturated monomer which is copolymerizable with (B) and (C).

2. A coating composition for an ink jet recording medium as claimed in claim 1, which comprises a synthetic resin emulsion obtained through said emulsion-polymerization using, based on the nonvolatile content of the emulsion in each case, 0.5 to 5.0 % by weight of the radically polymerizable emulsifier having sulfonic acid groups contained in (A), 0.1 to 15 % by weight of (B), 59 to 98% by weight of (C) and 0 to 39 % by weight of (D).

3. A coating composition for an ink jet recording medium as claimed in claim 1 or 2, wherein (C) is at least one monomer selected from styrene, α-methylstyrene, cyclohexylacrylate and cyclohexylmethacrylate.

4. A coating composition for an ink jet recording medium as claimed in any one of claims 1 to 3, wherein (D) is an alkyl (meth)acrylate and an unsaturated carboxylic acid.

5. A coating composition for an ink jet recording medium as claimed in any one of claims 1 to 4, wherein the particle diameter of the synthetic resin emulsion is 80 nm or less, preferably 50 nm or less.

6. A coating composition for an ink jet recording medium as claimed in any one of claims 1 to 5, wherein the particle diameter of the colloidal silica is 100 nm or less, preferably 50 nm or less.

7. A coating composition for an ink jet recording medium as claimed in any one of claims 1 to 6, wherein the amount of colloidal silica incorporated is 10 to 900 % by weight relative to the synthetic resin emulsion based on the nonvolatile content.

8. An ink jet recording medium, wherein an ink fixation layer or layers comprising a pigment, a binder and a cationic ink fixation agent is or are provided on either or both sides of a recording medium substrate, and a coating composition for an ink jet recording medium as claimed in any one of claims 1 to 7 is then applied onto the ink fixation layers or onto either one of the layers.

9. An ink jet recording medium, wherein a coating composition for an ink jet recording medium as claimed in any one of claims 1 to 7 is applied onto a substrate which, in the inside, contains a pigment and a cationic fixation agent.
